# EUROPÄISCHE PATENTSCHRIFT

(11) **EP 4 632 516 B1**
(45) Veröffentlichungstag und Bekanntmachung des Hinweises auf die Patenterteilung: **09.09.2026**
(21) Anmeldenummer: 25158838.0
(22) Anmeldetag: 19.02.2025
(51) Int. Cl.: G05D 1/224

(54) **TRAJEKTORIENBASIERTES SYSTEM ZUR UNTERSTÜTZUNG VON TELEOPERATOREN**
TRAJECTORY-BASED SYSTEM FOR SUPPORTING TELEOPERATORS
SYSTÈME BASÉ SUR DES TRAJECTOIRES POUR SUPPORTER DES TÉLÉOPÉRATEURS

(30) Priorität: 11.04.2024 DE 102024203362
(43) Veröffentlichungstag der Anmeldung: 15.10.2025
(73) Patentinhaber: Stellantis Auto SAS, 78300 Poissy (FR); FCA US LLC, Auburn Hills, MI 48326-2766 (US)
(72) Erfinder: FRANK, Sebastian, 65428 Rüsselsheim am Main (DE); EBERLE, Ulrich, 65428 Rüsselsheim am Main (DE)
(74) Vertreter: ESIP

(56) Entgegenhaltungen:
- DE-A1- 102016 216 335
- DE-A1- 102019 206 908
- US-A1- 2020 241 543
- US-B2- 9 958 864

## Beschreibung

Die Erfindung betrifft ein Verfahren zum Betreiben eines Teleoperationszentrums für ferngesteuerte Fahrzeuge.

Typische konventionelle Kraftfahrzeuge wie Personenkraftwagen sind darauf ausgelegt, dass deren Fahrzeugführung durch eine im Fahrzeug befindliche Person stattfindet. Mit zunehmendem Automatisierungsgrad ändert sich die Rolle dieser Person von einem Fahrzeugführer zur aktiven Fahrzeugführung zunehmend hin zur alleinigen Aufgabe der Überwachung der vom Fahrzeug selbstständig ausgeführten Fahrmanöver und Steuereingriffe. An der Spitze dieser Entwicklung stehen vollständig automatisierte Fahrzeuge, welche autonom nicht nur einzelne Manöver, sondern das Abfahren einer vollständigen geplanten Route durchführen können. Während ein menschlicher Fahrzeugführer in einem nicht-automatisierten Fahrzeug das alleinige Entscheidungsorgan des Fahrzeugs ist, übernimmt er auch zumindest in Teilen die Rolle von Aktoren, wenn durch seine Bewegungen Stellgrößen mechanisch (höchstens mit direkter Unterstützung) vorgegeben werden. Mit zunehmendem Automatisierungsgrad von Fahrzeugen sind jedoch Aktoren vorzusehen, beispielsweise elektrische oder hydraulische Aktoren, welche alle durch Steuerelektronik angesteuert werden, sodass ein Rechner des Fahrzeugs entsprechende Kommandos an die Aktoren übermitteln kann, welche diese dann mechanisch umsetzen. Dieser Umstand erlaubt es, eine Schnittstelle an einer digitalen Steuereinheit oder direkt an den Aktoren des Fahrzeugs zur Fahrzeugführung aus einer externen Zentrale anzusteuern. So ist die Möglichkeit einer Teleoperation des automatisierten Fahrzeugs eröffnet, bei der ein menschlicher Fahrzeugführer des Fahrzeugs eben nicht im Fahrzeug selbst Platz nehmen muss, sondern außerhalb des Fahrzeugs an einem stationären Arbeitsplatz sitzen kann, und Kommandos an diese Schnittstelle des Fahrzeugs vorgeben kann, welche per Datenübertragung, insbesondere drahtlos, an das Fahrzeug zur Ausführung übermittelt werden. Zudem können relevante Fahrzeuginformationen (zum Beispiel ein Videostrom mit Bildern aus einer Egoperspektive, beispielsweise vom Fahrersitz des Fahrzeugs aufgenommen) an den entfernt steuernden Fahrzeugführer übermittelt werden. Findet die Teleoperation in einer Umgebung mit weiteren Verkehrsteilnehmern statt, kann der menschliche Fahrzeugführer durch Erfassung der lokalen Umgebung des Fahrzeuges und darin befindlicher weiterer Verkehrsteilnehmer nötige Fahrzeugbewegungen (durch laterale/longitudinale Steuerung) zur Vermeidung von Verkehrsbehinderungen und Gefahrensituationen zur Erreichung eines Zielortes einleiten.

Die DE 10 2021 123 234 A1 betrifft in diesem Zusammenhang einen teleoperierenden Fahrzeugführer-Arbeitsplatz für ein teleoperiertes Kraftfahrzeug, wobei das Kraftfahrzeug eine Frontkamera, eine Heckkamera, eine linke Seitenkamera, die optional auf eine hintere linke Seite des Kraftfahrzeugs gerichtet ist, und eine rechte Seitenkamera, die optional auf eine hintere rechte Seite des Kraftfahrzeugs gerichtet ist, aufweist, und wobei das Kraftfahrzeug ausgestaltet ist, um jeweils von der Frontkamera, der Heckkamera, und der linken und der rechten Seitenkamera aufgenommene Bilder an den teleoperierenden Fahrzeugführer-Arbeitsplatz zu senden, wobei der teleoperierenden Fahrzeugführer-Arbeitsplatz ausgestaltet ist, um eine Anzeige der von dem Kraftfahrzeug empfangenen Bilder in Abhängigkeit einer Ausrichtung eines Kopfes eines teleoperierenden Fahrzeugführers und/oder in Abhängigkeit einer Blickrichtung des teleoperierenden Fahrzeugführers zu verändern. US9958864B2 offenbart autonome Fahrzeuge und damit verbundene mechanische, elektrische und elektronische Hardware, Computersoftware und -systeme sowie drahtgebundene und drahtlose Netzwerkkommunikation, um eine Flotte autonomer Fahrzeuge als Dienstleistung bereitzustellen. Genauer gesagt sind Systeme, Vorrichtungen und Verfahren so konfiguriert, dass sie eine Flotte autonomer Fahrzeuge verwalten. Insbesondere kann ein Verfahren das Bestimmen von Zielorten für autonome Fahrzeuge, das Berechnen von Lieferorten, zu denen die autonomen Fahrzeuge geleitet werden, auf einer Dienstplattform für autonome Fahrzeuge, das Identifizieren von Daten zur Implementierung eines mit einem autonomen Fahrzeug verbundenen Lieferorts und das Übertragen von Daten, die einen Befehl darstellen, an das autonome Fahrzeug umfassen. Der Befehl kann so konfiguriert sein, dass er die Navigation des autonomen Fahrzeugs zum Lieferort veranlasst. DE102019206908A1 offenbart ein Verfahren zum Trainieren wenigstens eines Algorithmus für ein Steuergerät eines Kraftfahrzeugs, wobei der Algorithmus durch ein selbstlernendes neuronales Netz trainiert wird, umfassend folgende Schritte: a) Bereitstellen eines Computerprogrammproduktmoduls für die automatisierte bzw. autonome Fahrfunktion, b) Einbetten des trainierten Computerprogrammproduktmoduls in das Steuergerät, c) Fahren des Kraftfahrzeugs in einer real existierenden Verkehrsumgebung durch einen menschlichen Fahrer, wobei die Fahrt eine gefahrene Trajektorie bestimmt, d) Zuführen von Daten einer Umgebungs- und einer Kraftfahrzeugsensorik zum Steuergerät und Berechnen einer virtuellen Trajektorie durch den Algorithmus, e) Ableiten einer Metrik aus einem Vergleich der gefahrenen Trajektorie und der virtuellen Trajektorie sowie Speichern der Daten der Umgebungssensorik und der Kraftfahrzeugsensorik, wenn für eine Verkehrssituation bestimmte Metrikkriterien erfüllt sind, f) Zurverfügungstellen von Informationen betreffend die Verkehrssituation an eine Verkehrssimulation, g) Analyse der Verkehrssituation durch die Verkehrssimulation, wobei mittels der Verkehrssimulation die Daten der Verkehrssituation variiert werden, und h) Trainieren des Algorithmus durch die Variation der Verkehrssituation. DE102016216335 offenbart ein System zur Erzeugung mindestens einer zweiten Trajektorie für einen ersten Streckenabschnitt einer Straße, umfasst eine erste Schnittstelle zum Empfangen von ersten Daten, die mindestens eine erste Trajektorie repräsentieren. Die ersten Daten wurden beim Befahren des ersten Streckenabschnitts von mindestens einem durch einen menschlichen Fahrer gesteuerten Fahrzeug erfasst. Die erste Schnittstelle ist außerdem zum Empfangen von zweiten Daten eingerichtet, welche Umweltbedingungen zum Zeitpunkt der Erfassung der ersten Trajektorie repräsentieren, und zum Empfangen von dritten Daten, die bei der Erfassung der ersten Trajektorie vorliegende fahrzeugbezogene Merkmale repräsentieren. Das System umfasst außerdem ein erstes Datenverarbeitungsmodul, welches ein Clustering mehrerer erster Trajektorien anhand zugehöriger zweiter Daten und/oder dritter Daten durchführt, eine Datenbank zur abrufbaren Speicherung der Ergebnisse des Clustering, und eine zweite Schnittstelle zum Empfangen einer Anforderung zur Übermittlung einer zweiten Trajektorie und zur entsprechenden Übermittlung der angeforderten zweiten Trajektorie.

Wenn ein automatisiert betriebenes Fahrzeug Schwierigkeiten hat, Entscheidungen zu treffen oder nicht in der Lage ist, eine bestimmte Situation im Straßenverkehr zu bewältigen, kann ein Fahrzeugführer aus einem stationären Steuerstand herangezogen werden, um ferngesteuert die Fahrzeugführung zwischenzeitlich zu übernehmen. Es gibt dabei mehrere Gründe, warum der Einsatz eines entfernt steuernden Fahrzeugführers für grundsätzlich automatisiert betriebene Fahrzeuge sinnvoll sein kann: Liegt eine komplexe Situation vor, die den Algorithmus des automatisierten Fahrzeugs zur selbstständigen Fahrsteuerung überfordert, kann ein menschlicher Fahrzeugführer aus einem stationären Steuerstand durch manuelle Übernahme des Fahrzeuges und entsprechender Fernsteuerung das Fahrzeug sicher durch die Situation führen. In anderen Fällen kann das Fahrsteuerungssystem des Fahrzeugs möglicherweise selbst nicht in der Lage sein, eine optimale Entscheidung zu treffen. Auch hierbei kann der Fahrzeugführer aus dem stationären Steuerstand helfen, indem er entsprechende Entscheidungen trifft, die auf seiner menschlichen Erfahrung und Intuition basieren. Auch können damit Kosten eingespart werden, da ein automatisiertes Fahrzeug auch grundsätzlich autonom betrieben werden kann, wenn noch nicht jede Verkehrssituation von diesem garantiert autonom gehandhabt werden kann. Außerdem kann für manche Situationen die menschliche Erfahrung im Gegensatz zur maschinellen wertvoll sein, beispielsweise auf weitere menschliche Interaktion in der Umgebung des ferngesteuerten Fahrzeugs adäquat reagieren zu können. Liegen beispielsweise Handzeichen von umherstehenden Personen oder verbale Aufforderung von Passanten vor, kann unter Umständen das Fahrzeug diese nicht interpretieren, der Fahrzeugführer aus der Entfernung jedoch schon. Auch bei technischen Problemen kann ein menschlicher Fahrer noch in der Lage sein, das Fahrzeug sicher zu bewegen oder an einen sicheren Ort zu verschieben, während der Algorithmus des automatischen Fahrsteuerungssystems dies nicht mehr kann. In Zusammenschau kann der Einsatz von teleoperierenden Fahrzeugführern für automatisierte Fahrzeuge in bestimmten Situationen die Sicherheit erhöhen, die Effizienz steigern und die Kosten senken.

Nachteilig an der Übernahme eines Fahrzeugs in Teleoperation ist in geringem Maße die Latenz, das heißt die Zeitverzögerung, die bei der Übertragung der Steuerbefehle aus dem stationären Steuerstand zum Fahrzeug, sowie in hohem Maße die Latenz, die bei der Übertragung des Videostroms aus dem Fahrzeug aus Egoperspektive an den stationären Steuerstand jeweils zwangsläufig auftritt. Während die drahtlose Übertragung, d. h. der Lauf der Funksignale, mit Lichtgeschwindigkeit und damit quasi in Echtzeit erfolgt, tragen eine Kamera zur Aufnahme der Bildsequenzen für das Video, Module zur Übertragung der Daten (welche unter Umständen die Ausführung algorithmischer Rechenschritte erfordern), ein Bildschirm im stationären Steuerstand wesentlich zu dieser Latenz bei; im Falle der Steuerkommandos ist die Latenz im Wesentlichen durch Beiträge der Eingabeeinheiten am stationären Steuerstand, Module zur Verarbeitung und Übertragung sowie zum Empfang dieser Daten und den Aktoren im Fahrzeug zusammengesetzt.

Die Latenzen, insbesondere die, die bei der Übertragung des Videostroms vom Fahrzeug entsteht, vermindern das Situationsbewusstsein des Fahrzeugführers am stationären Steuerstand und können dazu führen, dass der Fahrzeugführer eine soweit verzögerte oder ungenaue Wahrnehmung der Umgebung um das Fahrzeug erhält, dass Fehlentscheidungen oder Fehlreaktionen resultieren. Umgekehrt führt die Latenz der Datenübertragung aus dem stationären Steuerstand zum Fahrzeug unter Umständen dazu, dass der Fahrzeugführer Schwierigkeiten hat, das Fahrzeug präzise und konvergent auf eine Soll-Trajektorie zu steuern, sodass mehrfache Überschwinger in der Steuerung zu Schwingungen insbesondere in der Seitenbewegung des Fahrzeugs führen können. Je größer die Latenzen in beiden Richtungen, umso höher die kognitive Belastung des Fahrzeugführers. Die benötigte höhere Aufmerksamkeit kann zu Stress und Ermüdung des Fahrzeugführers führen.

In gewissen Grenzen können diese Latenzen durch technische Maßnahmen verringert werden, beispielsweise durch Verwendung von drahtlosen Funknetzen mit höherer Bandbreite, geringeren Latenzen, durch Nutzung von dedizierten Kommunikationskanälen, usw.; Teleoperateure müssen deshalb einem besonderen Training unterzogen werden, welches sie auf die Besonderheiten des teleoperierten Fahrens schult. Sobald der Teleoperator die Trainingsphase abgeschlossen hat, führt er Fahrzeuge selbstständig im Straßenverkehr. Trotz des Trainings kann sich die tatsächliche Ausprägung des Fahrverhaltens des Teleoperateurs im realen Betrieb von der erwarteten Verhaltensweise unterscheiden. Sollte es hierdurch zu Unfällen kommen, oder andere Verkehrsteilnehmer melden problematisches Fahrverhalten, kann im Nachgang ein intensiviertes Training des betroffenen Teleoperators angesetzt werden, um dem Teleoperator seine Verhaltensweise zu reflektieren und hierdurch zu einer Änderung des Fahrverhaltens hingewirkt werden. Das Problem ist hier jedoch, dass unangebrachtes Fahrverhalten nicht immer gemeldet wird, beziehungsweise Situationen, in denen der Verkehrsfluss behindert oder gefährdet wird, welche nicht zu einem Unfall führen, nicht zwangsweise zu einer Reflexion des Fahrverhaltens führen, da diese nicht registriert werden. Gleichzeitig kann auch übervorsichtiges Fahren des Teleoperators zu einer Behinderung des Verkehrsflusses und zu Effizienzverlusten des Teleoperationsbetreibers führen. Ein weiteres Problem betrifft die Ausbildung des Teleoperators selbst. Auch wenn für ein Training bestimmte Verkehrsszenarien ausgewählt werden und der auszubildende Teleoperator in Begleitung eines Sicherheitsfahrers mehrere Kilometer fährt, kann das Training nicht den unendlichen Raum an Verkehrssituationen abbilden. Weiterhin ist es schwierig, Verkehrsszenarien für das Training zu identifizieren. Besonders Verkehrsszenarien, welche auf den späteren Einsatz des Teleoperators abzielen, sind nicht direkt verfügbar.

Es ist daher wünschenswert, ein System bereitzustellen, mit welchem das Fahrverhalten eines Teleoperators bewertet werden kann. Aus der teleoperierten Fahrt sollte nicht-adäquates Fahrverhalten abgeleitet werden, welches zur Reflexion genutzt werden kann, um somit Einsatzgebiete von Teleoperateuren zu steuern. Weiterhin muss das System aus dieser Situation relevante Trainingsszenarien ableiten können.

Im Stand der Technik ist es in diesem Zusammenhang zumindest bekannt, eine Rückmeldung an einen Fahrer über eine Fahrzeugführung zu geben.

Die EP 2 165 321 B1 betrifft hierzu ein Verfahren zum Bereitstellen von Rückmeldung an Fahrer, umfassend: Überwachen ausgewählter Fahrzeugparameter, während ein Fahrzeug gefahren wird, wobei die ausgewählten Fahrzeugparameter eine Fahrzeugbeschleunigung in der lateralen, längsgerichteten und vertikalen Richtung umfassen; Messen der Fahrzeugbeschleunigung in der lateralen, längsgerichteten und vertikalen Richtung über eine vorbestimmte Zeitspanne hinweg; Bestimmen einer Richtung der Schwerkraft und einer Richtung der Fahrzeugbewegung; Filtern von Gravitationswirkungen aus den Beschleunigungsmessungen, wenn sich das Fahrzeug auf einer Steigung befindet oder sich seine horizontale Oberflächenausrichtung ändert; Detektieren einer Nichteinhaltung eines Fahrzeugbetriebs unter Verwendung der ausgewählten Fahrzeugparameter; und Benachrichtigen des Fahrers über eine Nichteinhaltung eines Fahrzeugbetriebs.

Aufgabe der Erfindung ist es, das teleoperierte Führen eines Fahrzeugs zu verbessern.

Die Erfindung ergibt sich aus den Merkmalen des unabhängigen Anspruchs. Vorteilhafte Weiterbildungen und Ausgestaltungen sind Gegenstand der abhängigen Ansprüche.

Ein erster Aspekt der Erfindung betrifft ein Verfahren zum Betreiben eines Teleoperationszentrums für ferngesteuerte Fahrzeuge, aufweisend die Schritte:
- Bereitstellen einer auf einem Routen-Abschnitt aufgezeichneten Trajektorie und von auf diesem Routen-Abschnitt aufgezeichneten Sensordaten eines ersten Fahrzeugs, wobei das erste Fahrzeug auf dem Routen-Abschnitt in teleoperierter Fahrzeugführung gesteuert wurde und die Sensordaten Informationen über die Umgebung des ersten Fahrzeugs umfassen;
- Bereitstellen einer Vielzahl von insbesondere vor der Fahrt des ersten Fahrzeugs aufgezeichneten Trajektorien und jeweiligen Sensordaten von zweiten Fahrzeugen auf demselben Routen-Abschnitt, wobei die zweiten Fahrzeuge ebenfalls in teleoperierter Fahrzeugführung gesteuert wurden;
- Ausführen einer Klassifizierung der Sensordaten des ersten Fahrzeugs zur Analyse seiner Verkehrssituation beim Befahren des Routen-Abschnitts und einer Klassifizierung der jeweiligen Sensordaten der zweiten Fahrzeuge zur Analyse deren jeweiliger Verkehrssituationen;
- Erzeugen einer Referenztrajektorie aus solchen Trajektorien der zweiten Fahrzeuge, deren jeweilige zugehörige ermittelte Verkehrssituation einer vorgegebenen Ähnlichkeitsbedingung im Bezug auf die Verkehrssituation des ersten Fahrzeugs in seinem Routen-Abschnitt genügt;
- Vergleichen der Trajektorie des ersten Fahrzeugs mit der Referenztrajektorie auf eine Abweichungsmetrik und Auswählen des Routen-Abschnitts zum Teleoperator-Training in einer Simulation oder einem Versuchsgelände, wenn dessen Abweichungsmetrik eine vorgegebene Grenzbedingung überschreitet.

Es werden somit die Voraussetzungen geschaffen, um ein Verfahren zum Trainieren von Teleoperatoren für ein teleoperiertes Fahren von Kraftfahrzeugen im Straßenverkehr durchzuführen. Da sich das Verfahren auf die Bewertung eines individuellen Fahrverhaltens eines Teleoperators oder eines Fahragenten bezieht, wird die individuelle Trajektorie des Teleoperators benötigt. Diese umfasst aus den Positions- sowie daraus abgeleiteten Bewegungsdaten in Längs- sowie Querrichtung. Neben den Trajektorien werden auch die aufgezeichneten Sensordatendaten der teleoperierten Fahrt genutzt. Diese müssen im Fall der Teleoperation durch die Teleoperation selbst zur Verfügung gestellt werden. Benötigte Sensordaten (Kameradaten, Geopositionsdaten) der teleoperierten Fahrt werden also neben der Trajektorie des ersten Fahrzeugs gespeichert.

Um die Fahrleistung des Teleoperators des ersten Fahrzeugs, bzw. besondere Situationen zu erfassen, werden neben diesen Daten des individuellen Teleoperators des ersten Fahrzeugs auch Daten mehrerer teleoperierter Fahrten zweiter Fahrzeuge herangezogen. Diese umfassen ebenfalls deren aufgezeichnete Trajektorien, analog zur individuellen Trajektorie des ersten Fahrzeugs, und aufgezeichnete Sensordaten deren jeweilger teleoperierten Fahrt.

Die Auswahl des Routenabschnitts richtet sich beispielsweise nach Vorgabe, oder basiert auf einer digitalen Karte. Während der Routenabschnitt einen Straßenabschnitt oder eine Kombination von Straßenabschnitten angibt, bezeichnet die jeweilige Trajektorie einen Positionsverlauf mit Zeit-Informationen auf dem jeweiligen Routenabschnitt. Der Positionsverlauf zusammen mit den Zeit-Informationen erlaubt Rückschlüsse auf Geschwindigkeiten und Beschleunigungen des Fahrzeugs.

Interessierende Routen-Abschnitte, welche vom ersten Fahrzeug befahren worden sind, werden somit betrachtet und nach weiteren Trajektorien-Informationen von zweiten Fahrzeugen abgesucht. Die Gesamtheit von Informationen über Trajektorien zusammen mit aufgezeichneten weiteren Sensordaten der zweiten Fahrzeuge werden entsprechend herausgefiltert, um nur diejenigen auf dem jeweiligen interessierenden Routen-Abschnitt des ersten Fahrzeugs bereitzustellen, die unter ähnlichen relevanten Bedingungen stattfanden.

Die Sensordaten des ersten Fahrzeugs und der zweiten Fahrzeuge jeweils mit Bezug zu ein und demselben Routen-Abschnitt werden nun einer Segmentierung unterzogen. In dieser Segmentierung werden Metainformationen zur gefahrenen Route extrahiert. Diese Informationen umfassen bevorzugt eine Klassifizierung von anderen Verkehrsteilnehmern der Verkehrssituation (die Segmentierung von Fahrszenen ist bereits Stand der Technik), sowie weiterer Elemente der Verkehrssituation wie zum Beispiel Baustellen, kurzfristige Verkehrselemente wie Baustellenampeln, temporäre Verdeckungen. Aus diesem Vorgang gehen nun segmentierte Szenarien der individuellen, und falls noch nicht gespeichert, der aufgezeichneten Trajektorien hervor. Anhand der Segmentierung der Sensordaten werden nun die aufgezeichneten Daten der zweiten Fahrzeuge in einer Situationsfilterung gefiltert.

Nur durch den Vergleich solcher aus den Sensordaten gewonnen Metadaten einer jeweiligen Fahrt können vergleichbare Trajektorien der zweiten Fahrzeuge gefunden werden. Vorteil hierbei ist, dass zum Beispiel eine individuelle Fahrt, in welcher ein langsames, vorausfahrendes Fahrzeug überholt wird, nicht mit kollektiv aufgezeichneten Daten ohne vorausfahrendes Fahrzeug verglichen werden.

Mit der entsprechenden Auswahl der Trajektorien der zweiten Fahrzeuge auf dem betrachteten Routenabschnitt kann die Menge dieser Trajektorien der zweiten Fahrzeuge zu einer Referenztrajektorie fusioniert werden. Die Referenztrajektorie kann mit der Trajektorie des ersten Fahrzeugs an ein und demselben Routenabschnitt verglichen werden. Dafür werden bevorzugt die Referenztrajektorie und die Trajektorie des ersten Fahrzeugs in Einzelabschnitte untergliedert und die Untergliederung bevorzugt an Landmarken wie Stoppschilder o. ä. fixiert. Die Unterteilung folgt bevorzugt zum einen den Randbedingungen der Optimierung. Zum Beispiel ein Stoppschild oder eine Änderung der Geschwindigkeitsbegrenzung werden als Fixpunkte der Aufteilung betrachtet. Um diese Fixpunkte kann nun ein Untersuchungsabstand (örtlich) betrachtet werden. Dieser leitet sich zum Beispiel aus der erlaubten Fahrgeschwindigkeit und der Geschwindigkeit des Fixpunktes ab.

Alternativ zur Untergliederung kann eine kontinuierliche Betrachtung stattfinden, beispielsweise durch Interpolation von fehlenden Daten der Trajektorie. In jedem Fall werden die Referenztrajektorie und die Trajektorie des ersten Fahrzeugs auf Abweichungen untersucht, beispielsweise durch Integralbildung einer Differenz, d. h. durch Betrachtung einer Fläche zwischen den beiden, der Referenztrajektorie und der Trajektorie des ersten Fahrzeugs.

Dabei kann nicht nur der Ort der Bahnkurven (insbesondere eine laterale Abweichung) als Teilmenge der Trajektorien verglichen werden, sondern beispielsweise auch die Geschwindigkeit auf der jeweiligen Bahnkurve. Somit kann ermittelt werden, ob das erste Fahrzeug auf dem betrachteten Routen-Abschnitt beispielsweise deutlich schneller oder deutlich langsamer als die aus den Bewegungsdaten der zweiten Fahrzeugen gewonnene Referenztrajektorie unterwegs war.

Neben dem verbesserten Training von Teleoperatoren ist es auch denkbar, dass durch die Analyse ein Einsatzspektrum des Teleoperators erstellt wird, wobei individuelle Performancevorteile (besser in der Stadt als andere, besser auf der Autobahn als andere, besser bei dichtem Verkehr, ...) aus der Trajektorienanalyse abgeleitet werden können (geringere absolute Abweichung von der Referenztrajektorie als andere), sodass ein Teleoperator, welcher in einem Gebiet sicher Fahren kann, auch in diesem Gebiet eingesetzt wird.

Es sind weitere vorteilhafte Wirkungen der Erfindung, dass eine Abbildung der Realität durch Einbezug real gefahrener Trajektorien erfolgt, und somit auch physische und situationsbedingte Gegebenheiten, welche in einer Simulation nicht berücksichtigt werden können, durch reale Daten miteinbezogen werden. Es kann somit vorteilhaft eine Erhöhung der Sicherheit teleoperierten Fahrens durch eine verbesserte Ausbildung der Teleoperatoren und der Einsatzsteuerung der Teleoperatoren bezogen auf individuelles Fahrverhalten erhalten werden. Außerdem kann eine Zuweisung der Teleoperatoren zu gewünschten Fahrten abhängig vom individuellen Fahrverhalten erfolgen. So kann beispielsweise ein Teleoperator, welcher die Herausforderungen von Autobahnen gut meistert, tendenziell dort eingesetzt werden, während ein für den Stadtverkehr besser geeigneter diesen Stadtverkehr übernehmen kann.

Gemäß einer vorteilhaften Ausführungsform wird bei der jeweiligen Klassifizierung zumindest eines der Folgenden identifiziert: Weitere Verkehrsteilnehmer, eine Baustelle, temporär auftretende Verdeckungen, Hindernisse auf der Fahrbahn.

Gemäß einer weiteren vorteilhaften Ausführungsform werden Randbedingungen definiert, unter deren Einhaltung die Referenztrajektorie ermittelt wird. Die Referenztrajektorie gehorcht somit vordefinierten Restriktionen, welche insbesondere durch verkehrsrechtliche Einschränkungen definiert werden, beispielsweise die Einhaltung von Geschwindigkeitsbeschränkungen. Hat ein Teleoperator in der Vergangenheit bei der Steuerung eines der zweiten Fahrzeuge diese nicht eingehalten, so überträgt sich vorteilhaft die Nichteinhaltung nicht in die Abweichungsmetrik zur Trajektorie des ersten Fahrzeugs.

Gemäß einer weiteren vorteilhaften Ausführungsform umfassen die Randbedingungen zumindest eines der folgenden: Die Einhaltung von Ampelsignalen, die Einhaltung von Vorgaben durch Verkehrsschilder, die Einhaltung allgemeingültiger Geschwindigkeitsbegrenzungen, die Einhaltung eines Sicherheitsabstands zu einem weiteren Verkehrsteilnehmer, die Einhaltung einer per Definition erlaubten Position im Routenabschnitt, die Einhaltung einer maximalen Längsbeschleunigung und/oder Querbeschleunigung des eigenen Fahrzeugs.

Gemäß einer weiteren vorteilhaften Ausführungsform führt eine Verletzung der Randbedingungen der Trajektorie des ersten Fahrzeugs zur Überschreitung der vorgegebenen Grenzbedingung.

Gemäß einer weiteren vorteilhaften Ausführungsform wird nach dem Vergleich der Trajektorie des ersten Fahrzeugs mit der Referenztrajektorie bei Unterschreiten der Grenzbedingung die Trajektorie des ersten Fahrzeugs in einen Datensatz zusammen mit den Trajektorien der zweiten Fahrzeuge aufgenommen, um bei Analyse eines weiteren Routen-Abschnitts als Trajektorie von zweiten Fahrzeugen zu gelten.

Gemäß einer weiteren vorteilhaften Ausführungsform werden die Sensordaten des ersten Fahrzeugs zur Nachbildung eines virtuellen Verkehrsszenarios in einem Fahrsimulator verwendet, wenn die Grenzbedingung überschritten wird, und wobei ein automatisches Fahrsteuerungssystem simuliert wird, um eine automatisch geführte Fahrt durch das virtuelle Verkehrsszenario auszuführen.

Hierdurch kann ein automatisches Fahrsteuerungssystem optimiert werden. Ziel ist es, Fahragenten, welche zum Beispiel zum Testen eines automatisierten Fahrsystems genutzt werden, zu parametrisieren. Die zur Segmentierung verwendeten Sensordaten dienen dazu, ein Abbild des realen Szenarios in einer Simulation nachzustellen und anschließend von einem Fahragenten durchfahren zu lassen. Der Fahragent ist hierbei der einzige autonom handelnde Teilnehmer der Simulation, während andere Verkehrsteilnehmer den aufgezeichneten Daten folgen. Es werden nun die simulierten Trajektorien des Fahragenten mit der Referenztrajektorie verglichen. Der Fahragent kann nun iterativ parametrisiert werden, wobei die stärksten Abweichungen zuerst zur Szenariengenerierung in der Simulation berücksichtigt werden. Anschließend kann dieses Szenario zum Beispiel mit bestärkendem Lernen trainiert werden. Ein erfolgreicher Fahragent kann nun auf die nächstniedrigere Abweichung trainiert werden. Hierdurch können für den Fahragenten relevante Szenarien identifiziert und zum Training genutzt werden. Die simulierte Trajektorie wird nicht den aufgezeichneten Trajektorien der zweiten Fahrzeuge hinzugefügt - oder alternativ, werden diese mit einer niedrigeren Gewichtung im Vergleich zu den real aufgezeichneten Trajektorien des Kollektivs berücksichtigt.

Gemäß einer weiteren vorteilhaften Ausführungsform wird das automatische Fahrsteuerungssystem unter Berücksichtigung der Referenztrajektorie trainiert.

Gemäß einer weiteren vorteilhaften Ausführungsform wird das automatische Fahrsteuerungssystem mit bestärkendem Lernen trainiert.

Gemäß einer weiteren vorteilhaften Ausführungsform wird das Verfahren während der Fahrt des ersten Fahrzeugs ausgeführt.

Hiermit kann die die Individualleistung während des Betriebs dem Teleoperator oder dem Teleoperationszentrum angezeigt werden, um zeitnah Gegenmaßnahmen zu ergreifen (z.B.: Darstellung des aktuellen Fahrverhaltens als Rückmeldung im Display des Teleoperators, Auswechslung eines Teleoperators zur Effizienzsteigerung)

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Ein Teleoperationszentrum in Anwendung gemäß einem Ausführungsbeispiel der Erfindung.
- Fig. 2:: Ein Szenario zur Fahrereinstufung gemäß einem Ausführungsbeispiel der Erfindung.

Die Darstellungen in den Figuren sind schematisch und nicht maßstäblich.

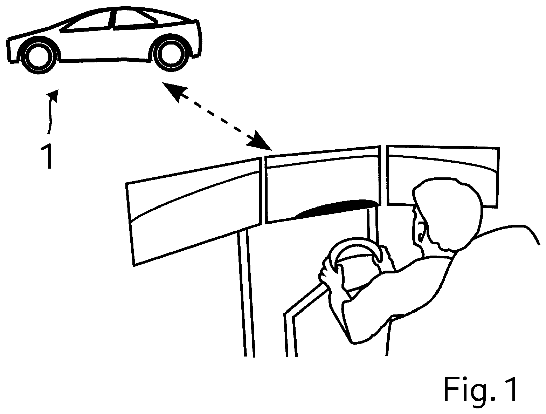

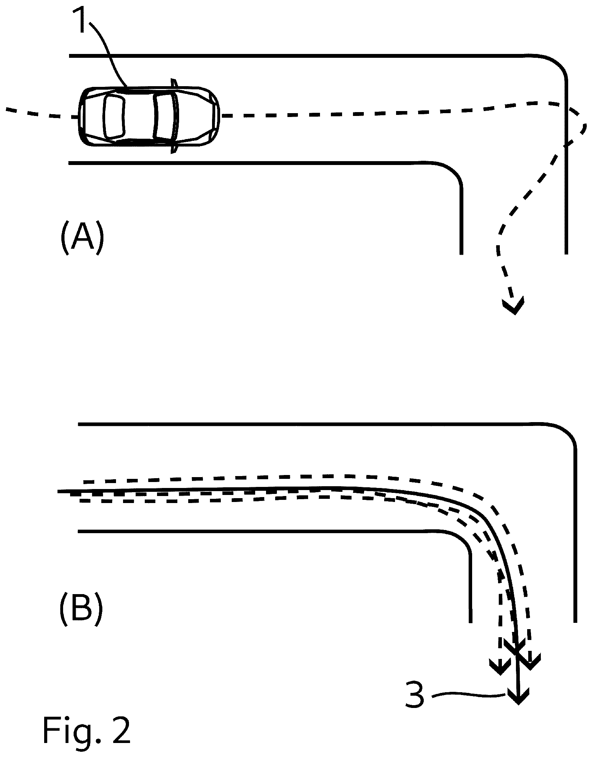

Fig. 1 zeigt einen Steuerstand in einem Teleoperationszentrum. Der Fahrer des ersten Fahrzeugs 1 ist hierbei örtlich weit entfernt vom ersten Fahrzeug 1. In seinem Steuerstand sind dem Fahrer die für einen Personenkraftwagen typischen Steuerelemente zur Verfügung gestellt, insbesondere Pedale, Lenkrad, etc.; auf einem Bildschirm vor ihm wird ihm ein Kamerabild aus einer Fahrzeugkamera in nahezu Echtzeit übertragen. Abgesehen von Latenzen in der Signalübertragung und den fehlenden auf seinen Körper wirkenden Beschleunigungen wirkt es für den Fahrer des ersten Fahrzeugs 1, als würde er in diesem selbst sitzen und dieses vor Ort manuell führen. Die an seinem Steuerstand getätigten Eingabebefehle wie die Betätigung des Lenkrads oder von Pedalen werden drahtlos an das erste Fahrzeug 1 übertragen, welches diese Befehle physisch umsetzt. Wegen der Latenzen oder unter Umständen verminderter Umwelterkennung durch den Fahrer wegen eingeschränkter Erfassung oder eingeschränkter Datenübertragung oder schlicht durch einen Fahrfehler des Fahrers kam es zu unerwünschten Manövern oder Fahrzeugzuständen kommen. Ein solches Szenario ist beispielhaft in der Fig. 2 erläutert, in der auch eine vorgegebene Abweichung mit angewendet wird, um möglichst vollautomatisiert solche unerwünschten Manöver oder Fahrzustände erkennen zu können.

Fig. 2 zeigt ein Szenario, bei welchem ein erstes Fahrzeug 1 von einem Teleoperator ferngesteuert aus einem Teleoperationszentrum wie in Fig. 1 beschrieben geführt wird. Im Teilbild (A) ist ein erstes Fahrzeug 1 aus der Vogelperspektive gezeigt, welches auf einem Routen-Abschnitt unterwegs ist. Dieser Routen-Abschnitt weist eine Straße mit einer 90° Kurve nach rechts auf. Gestrichelt eingezeichnet ist die Trajektorie des ersten Fahrzeugs 1. Da der Fahrer die Kurve zu spät erkannt hat, kommt es zu einem Überschießen des ersten Fahrzeugs 1 auf den linken Fahrbahnrand, wonach das erste Fahrzeug 1 wieder auf die Fahrbahn zurückkehrt. In Teilbild (B) ist eine Vielzahl von Trajektorien von zweiten Fahrzeugen mit gestrichelten Pfeilen eingezeichnet. Diese Trajektorien werden durch Selektion des Routen-Abschnitts des ersten Fahrzeugs 1 erhalten, und mittels einer Datenbankfrage ausgelesen. Es liegt jedoch für das erste Fahrzeug 1 auf seinem Routen-Abschnitt nicht nur eine Trajektorie vor, d. h. die Bahnkurve auf dieser Straße zusammen mit der Geschwindigkeit; die Sensordaten des ersten Fahrzeugs 1, welche es während seiner Fahrt aufgezeichnet hat, liegen ebenfalls vor. Insbesondere ist der Videodatenstrom an das Teleoperationszentrum mitprotokolliert worden und liegt somit auslesbar vor. Es erfolgt nun eine Segmentierung dieser Sensordaten, um ein Umfeldszenario analysierbar vorliegen zu haben. Hierbei kann geprüft werden, welche einzelnen der relevanten Situationsbedingungen für den Fahrer des ersten Fahrzeugs 1 vorgelegen haben. Ist beispielsweise vor dem ersten Fahrzeug 1 ein weiterer Verkehrsteilnehmer gefahren, der die Sicht auf die vorausliegende Kurve verdeckt hat und die Geschwindigkeit des ersten Fahrzeugs 1 naturgemäß limitiert hat, würde zumindest die geringere als übliche Geschwindigkeit des ersten Fahrzeugs 1 gegenüber den Geschwindigkeiten zuvor auf dem Routenabschnitt unterwegs gewesener zweiter Fahrzeuge keine echte Auffälligkeit sein. Hierfür müssen jedoch die Trajektorien der zweiten Fahrzeuge so ausgewählt werden, dass diese in einem sinnvoll vergleichbaren Szenario unterwegs waren auf demselben Routen-Abschnitt, wie das erste Fahrzeug 1 - im Beispiel mit einem ebenfalls langsam fahrenden vorausfahrenden Verkehrsteilnehmer. Entsprechend werden die Sensordaten der zweiten Fahrzeuge ebenfalls einer Segmentierung zugeführt, und die jeweiligen Szenarien mit einer Ähnlichkeitsbedingung überprüft. Diese Auswahl von Trajektorien mit den zugehörigen Sensordaten ist in Teilbild (B) gezeigt, woraus eine Referenztrajektorie beispielsweise durch Mittelung erzeugt wird. Die Referenztrajektorie wird mit der Trajektorie des ersten Fahrzeugs 1 aus Teilbild (A) verglichen und bei Überschreiten einer Abweichungsmetrik über eine vorgegebene Grenzbedingung die Trajektorie des ersten Fahrzeugs 1 als überdenkenswert markiert. Dieselbe Szene kann insbesondere auf Grundlagen der Sensordaten des ersten Fahrzeugs 1 in einem Fahrsimulator nachgestellt werden und mit einem Fahrtrainer an der Verbesserung gearbeitet werden. Auch kann ein solches Szenario für ein automatisches Fahrsteuerungssystem verwendet werden, um als wahrscheinlich besonders herausfordernde Situation zum Trainieren bzw. Validieren eines automatischen Fahrsteuerungssystems verwendet zu werden.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Fahrzeug
- 3: Referenztrajektorie

## Patentansprüche

1. Verfahren zum Betreiben eines Teleoperationszentrums für ferngesteuerte Fahrzeuge, aufweisend die Schritte:
- Bereitstellen einer auf einem Routen-Abschnitt aufgezeichneten Trajektorie und von aufgezeichneten Sensordaten eines ersten Fahrzeugs (1), wobei das erste Fahrzeug (1) auf dem Routen-Abschnitt in teleoperierter Fahrzeugführung gesteuert wurde und die Sensordaten Informationen über die Umgebung des ersten Fahrzeugs (1) umfassen;
- Bereitstellen einer Vielzahl von aufgezeichneten Trajektorien und jeweiligen Sensordaten von zweiten Fahrzeugen auf demselben Routen-Abschnitt, wobei die zweiten Fahrzeuge ebenfalls in teleoperierter Fahrzeugführung gesteuert wurden;
- Ausführen einer Klassifizierung der Sensordaten des ersten Fahrzeugs (1) zur Analyse seiner Verkehrssituation beim Befahren des Routen-Abschnitts und einer Klassifizierung der jeweiligen Sensordaten der zweiten Fahrzeuge zur Analyse deren jeweiliger Verkehrssituationen;
- Erzeugen einer Referenztrajektorie (3) aus solchen Trajektorien der zweiten Fahrzeuge, deren jeweilige zugehörige ermittelte Verkehrssituation einer vorgegebenen Ähnlichkeitsbedingung im Bezug auf die Verkehrssituation des ersten Fahrzeugs (1) in seinem Routen-Abschnitt genügt;
- Vergleichen der Trajektorie des ersten Fahrzeugs (1) mit der Referenztrajektorie (3) auf eine Abweichungsmetrik und Auswählen des Routen-Abschnitts zum Teleoperator-Training in einer Simulation oder einem Versuchsgelände, wenn dessen Abweichungsmetrik eine vorgegebene Grenzbedingung überschreitet.

2. Verfahren nach Anspruch 1,
wobei bei der jeweiligen Klassifizierung zumindest eines der Folgenden identifiziert wird: Weitere Verkehrsteilnehmer, eine Baustelle, temporär auftretende Verdeckungen, Hindernisse auf der Fahrbahn.

3. Verfahren nach einem der vorhergehenden Ansprüche,
wobei Randbedingungen definiert werden, unter deren Einhaltung die Referenztrajektorie (3) ermittelt wird.

4. Verfahren nach Anspruch 3,
wobei die Randbedingungen zumindest eines der folgenden umfassen: Die Einhaltung von Ampelsignalen, die Einhaltung von Vorgaben durch Verkehrsschilder, die Einhaltung allgemeingültiger Geschwindigkeitsbegrenzungen, die Einhaltung eines Sicherheitsabstands zu einem weiteren Verkehrsteilnehmer, die Einhaltung einer per Definition erlaubten Position im Routenabschnitt, die Einhaltung einer maximalen Längsbeschleunigung und/oder Querbeschleunigung des eigenen Fahrzeugs.

5. Verfahren nach einem der Ansprüche 3 bis 4,
wobei eine Verletzung der Randbedingungen der Trajektorie des ersten Fahrzeugs (1) zur Überschreitung der vorgegebenen Grenzbedingung führt.

6. Verfahren nach einem der vorhergehenden Ansprüche,
wobei nach dem Vergleich der Trajektorie des ersten Fahrzeugs (1) mit der Referenztrajektorie (3) bei Unterschreiten der Grenzbedingung die Trajektorie des ersten Fahrzeugs (1) in einen Datensatz zusammen mit den Trajektorien der zweiten Fahrzeuge aufgenommen wird, um bei Analyse eines weiteren Routen-Abschnitts als Trajektorie von zweiten Fahrzeugen zu gelten.

7. Verfahren nach einem der vorhergehenden Ansprüche,
wobei die Sensordaten des ersten Fahrzeugs (1) zur Nachbildung eines virtuellen Verkehrsszenarios in einem Fahrsimulator verwendet werden, wenn die Grenzbedingung überschritten wird, und wobei ein automatisches Fahrsteuerungssystem simuliert wird, um eine automatisch geführte Fahrt durch das virtuelle Verkehrsszenario auszuführen.

8. Verfahren nach Anspruch 7,
wobei das automatische Fahrsteuerungssystem unter Berücksichtigung der Referenztrajektorie (3) trainiert wird.

9. Verfahren nach Anspruch 8,
wobei das automatische Fahrsteuerungssystem mit bestärkendem Lernen trainiert wird.

10. Verfahren nach einem der vorhergehenden Ansprüche,
wobei das Verfahren während der Fahrt des ersten Fahrzeugs (1) ausgeführt wird.

## Claims

1. Method of operating a teleoperation centre for remotely controlled vehicles, comprising the steps of:
- providing a trajectory recorded on a route section and recorded sensor data of a first vehicle (1), wherein the first vehicle (1) has been controlled on the route section in teleoperated vehicle guidance and the sensor data comprise information about the environment of the first vehicle (1);
- providing a plurality of recorded trajectories and respective sensor data of second vehicles on the same route section, the second vehicles also being controlled in teleoperated vehicle guidance;
- carrying out a classification of the sensor data of the first vehicle (1) for analysing its traffic situation when driving on the route section and a classification of the respective sensor data of the second vehicles for analysing their respective traffic situations;
- generating a reference trajectory (3) from those trajectories of the second vehicles whose respective associated determined traffic situation satisfies a predetermined similarity condition with respect to the traffic situation of the first vehicle (1) in its route section;
- comparing the trajectory of the first vehicle (1) with the reference trajectory (3) to a deviation metric and selecting the route section for teleoperator training in a simulation or an experimental site if its deviation metric exceeds a predetermined limit condition.

2. Process according to claim 1,
wherein at least one of the following is identified in the respective classification: further road users, a construction site, temporary occlusions, obstacles on the roadway.

3. Method according to any one of the preceding claims,
boundary conditions are defined under which the reference trajectory (3) is determined.

4. Method according to claim 3,
the boundary conditions include at least one of the following: compliance with traffic light signals, compliance with specifications by traffic signs, compliance with generally applicable speed limits, compliance with a safety distance to another road user, compliance with a position permitted by definition in the route section, compliance with a maximum longitudinal acceleration and/or transverse acceleration of the own vehicle.

5. Process according to any one of claims 3 to 4,
a violation of the boundary conditions of the trajectory of the first vehicle (1) leads to the predetermined boundary condition being exceeded.

6. Method according to any one of the preceding claims,
wherein, after the comparison of the trajectory of the first vehicle (1) with the reference trajectory (3) when the boundary condition is undershot, the trajectory of the first vehicle (1) is recorded in a data set together with the trajectories of the second vehicles, in order to be considered a trajectory of second vehicles when analysing a further route section.

7. Method according to any one of the preceding claims,
wherein the sensor data of the first vehicle (1) for simulating a virtual traffic scenario in a driving simulator are used when the limit condition is exceeded, and wherein an automatic driving control system is simulated, in order to carry out an automatically guided journey through the virtual traffic scenario.

8. Method according to claim 7,
whereby the automatic driving control system is trained taking into account the reference trajectory (3).

9. Method according to claim 8,
whereby the automatic driving control system is trained with reinforcing learning.

10. Method according to any one of the preceding claims,
the method is carried out during the travel of the first vehicle (1).

## Revendications

1. Procédé de fonctionnement d'un centre de téléopération pour véhicules télécommandés, comprenant les étapes suivantes:
- fournir une trajectoire enregistrée sur une section de route et des données de capteur enregistrées d'un premier véhicule (1), dans lequel le premier véhicule (1) a été contrôlé sur la section de route en guidage téléopéré du véhicule et les données de capteur comprennent des informations sur l'environnement du premier véhicule (1);
- fournir une pluralité de trajectoires enregistrées et des données de capteurs respectives de deuxièmes véhicules sur la même section de route, les deuxièmes véhicules étant également commandés en guidage téléopéré du véhicule ;
- effectuer une classification des données de capteurs du premier véhicule (1) pour analyser sa situation de trafic lors de la conduite sur la section de route et une classification des données de capteurs respectives des deuxièmes véhicules pour analyser leurs situations de trafic respectives ;
- générer une trajectoire de référence (3) à partir des trajectoires des deuxièmes véhicules dont la situation de circulation déterminée associée respective satisfait à une condition de similarité prédéterminée par rapport à la situation de circulation du premier véhicule (1) dans sa section de route ;
- comparer la trajectoire du premier véhicule (1) avec la trajectoire de référence (3) à une métrique d'écart et sélectionner la section de route pour la formation du téléopérateur dans une simulation ou un site expérimental si sa métrique d'écart dépasse une condition limite prédéterminée.

2. Procédé selon la revendication 1,
**caractérisé en ce que** l'un au moins des éléments suivants est identifié dans la classification respective: d'autres usagers de la route, un chantier, des occlusions temporaires, des obstacles sur la chaussée.

3. Procédé selon l'une quelconque des revendications précédentes,
les conditions limites dans lesquelles on détermine la trajectoire de référence (3).

4. Procédé selon la revendication 3,
les conditions limites comprennent au moins l'une des conditions suivantes : respect des feux de signalisation, respect des spécifications par les panneaux de signalisation, respect des limitations de vitesse généralement applicables, respect d'une distance de sécurité pour un autre usager de la route, respect d'un poste autorisé par définition dans la section de route, respect d'une accélération longitudinale maximale et/ou d'une accélération transversale du propre véhicule.

5. Procédé selon l'une quelconque des revendications 3 à 4,
une violation des conditions limites de la trajectoire du premier véhicule (1) conduit à un dépassement de la condition limite prédéterminée.

6. Procédé selon l'une quelconque des revendications précédentes,
**caractérisé en ce que**, après la comparaison de la trajectoire du premier véhicule (1) avec la trajectoire de référence (3) lorsque la condition limite est sous-atteinte, la trajectoire du premier véhicule (1) est enregistrée dans un ensemble de données avec les trajectoires des deuxièmes véhicules, afin d'être considérée comme une trajectoire de deuxièmes véhicules lors de l'analyse d'une nouvelle section de route.

7. Procédé selon l'une quelconque des revendications précédentes,
dans lequel les données de capteur du premier véhicule (1) pour simuler un scénario de traffic virtuel dans un simulateur de conduite sont utilisées lorsque la condition limite est dépassée, et dans lequel un système de contrôle automatique de la conduite est simulé, afin d'effectuer un voyage guidé automatiquement à travers le scénario de traffic virtuel.

8. Procédé selon la revendication 7,
le système de commande automatique de conduite est entraîné en tenant compte de la trajectoire de référence (3).

9. Procédé selon la revendication 8,
le système de contrôle automatique de la conduite est entraîné avec un apprentissage de renforcement.

10. Procédé selon l'une quelconque des revendications précédentes,
le procédé est mis en œuvre lors du déplacement du premier véhicule (1).
